# EUROPEAN PATENT APPLICATION

(11) **EP 1 387 243 A2**
(43) Date of publication of application: **04.02.2004**
(21) Application number: 03254417.3
(22) Date of filing: 12.07.2003
(51) Int. Cl.: G06F 3/033

(54) **User input device**

(30) Priority: 30.07.2002 GB 0217571
(71) Applicant: Nokia Corporation, 02150 Espoo (FI)
(72) Inventor: Wingett, Gary, Totton, Hampshire (GB); Lewis, Ian, Fleet Hampshire (GB); Dixon, Peter, Alton Hampshire (GB)
(74) Representative: Higgin, Paul

(57) **Abstract**

A user input device (2) comprising means (8, 6, 4) for producing a highlight for highlighting any one of the icons in an arrangement of icons, the arrangement having a first portion comprising a first plurality of icons and a second portion comprising at least one icon; a user input comprising a directional control (12) for user actuation and a selection control (14) for user actuation; and control means (8) arranged to change the position of the highlight in response to user actuation of the directional control (12), to select an icon of the second portion of the arrangement in response to user actuation of the selection control (14) when the icon is highlighted and to select automatically an icon of the first portion in response to the highlighting of the icon.

## Description

The present invention relates to a user input device which has particular application in hand-portable devices with graphical user interfaces.

According to one aspect of the present invention there is provided a user input device comprising: an arrangement of icons, the arrangement having a first portion comprising a first plurality of icons and a second portion comprising at least one icon; means for producing a highlight for highlighting any one of the icons; a user input comprising a directional control for user actuation and a selection control for user actuation; and control means arranged to change the position of the highlight from one icon to another in response to user actuation of the directional control, to select the at least one icon of the second portion of the arrangement in response to user actuation of the selection control when the at least one icon is highlighted and to select automatically one of the first plurality of icons in response to the highlighting of that icon.

The control means selects one of the first plurality of icons without user actuation of the selection control. A highlight is anything which visually distinguishes one icon from the other icons of the arrangement. The user input device preferably comprises a display for displaying the arrangement of icons and the highlight.

The arrangement of icons may be a rectangular array of icons, a circular array of icons or even an apparently random array of icons. The directional control is any multi-directional control that can move the highlight. The directional control and the selection control may be provided by a single user input device such as a joystick which is depressed to select.

According to one embodiment the arrangement comprises an N row by M column array of icons, the directional control allows 4-way movement of the highlight, in response to a user actuation, to an icon in an adjacent row but the same column or in an adjacent column but the same row, and the first plurality of icons are either in the first row and last row of the array or are in the first column and last column of the array. N and M may be equal or different.

According to a second embodiment, the arrangement comprises an N row by M column array of icons, the directional control allows 8-way movement of the highlight, in response to a user actuation, to an adjacent icon, and the first plurality of icons are those in the first and last rows of the array and those in the first and last columns of the array.

According to another aspect of the present invention there is provided a method of user input by selecting an icon from an arrangement of icons, the arrangement having a first portion comprising a first plurality of icons and a second portion comprising at least one icon, comprising the steps of: highlighting one icon at a time; selecting an icon of the first portion by highlighting it; and selecting an icon of the second portion by highlighting it and then actuating an input device.

According to a further aspect of the invention there is provided a user input device comprising: an arrangement of icons for user selection, the arrangement having a first portion comprising a first plurality of icons and a second portion comprising at least one icon; a user input comprising a directional control for user actuation and a selection control for user actuation; and means arranged to produce a highlight for highlighting any one of the icons and to change the position of the highlight from one icon to another in response to user actuation of the directional control, wherein a highlighted icon is selected without user actuation of the selection control if the highlighted icon is an icon of the first portion and is selected in response to user actuation of the selection control if the highlighted icon is an icon of the second portion.

According to a still further aspect of the present invention there is provided a user input device comprising: an arrangement of icons; means for producing a highlight for highlighting any one of the icons; a user input; and control means arranged to select a highlighted icon and to move the highlight from one icon to another in response to actuation of the user input and arranged to automatically move the highlight, after selection of an icon, to a "home" icon centrally located in the arrangement of icons.

According to another aspect of the present invention there is provided a method of user input by selecting an icon from an arrangement of icons, comprising the steps of: highlighting one icon at a time; and selecting a highlighted icon and then moving the highlight to a centrally located "home" icon.

For a better understanding of the present invention and to understand how the same may be brought into effect reference will now be made, by way of example only, to the following drawings, in which:
Fig. 1 illustrates a user input device;
Fig. 2 illustrates a mobile phone having a graphical user interface for user input using a four-way directional control;
Fig. 3 illustrates a mobile phone having a graphical user interface for user input using an eight-way directional control;
Fig. 4 illustrates a personal digital assistant or mobile phone having a graphical user interface for text entry using a four-way directional control;
Fig. 5a and 5b illustrate a mobile phone or personal digital assistant having a graphical user interface for text entry using an eight-way directional control;
Fig. 6 illustrates an algorithm used in the method of the present invention;
   and
Fig. 7 illustrates an alternative arrangement of icons.

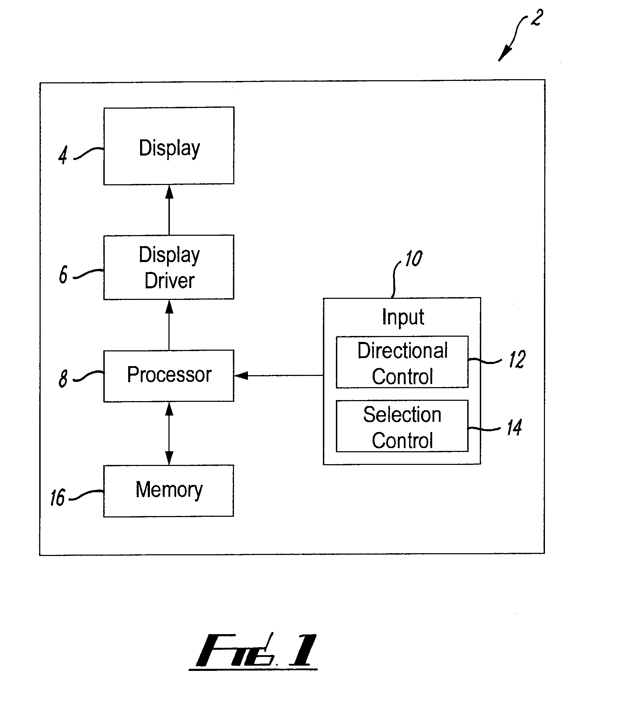

Fig. 1 illustrates a user input device 2. The user input device is preferably part of a hand-portable device, for example, a mobile phone or a personal digital assistant. The user input device 2 comprises a display 4, a display driver 6, a processor 8, a user input interface 10 and a memory 16. The user input interface 10 provides an input signal to the processor 8. The processor 8 under the control of a program stored in memory 16 controls the display driver 6 to display a graphical user interface on the display 4. The user interacts with the displayed graphical user interface via the user input interface 10.

The user input interface 10 comprises a user actuable directional control 12 and a user actuable selection control 14. The directional control 12 may be formed from a joystick, a collection of separate user depressible buttons or some other type of appropriate cursor control device. The selection control 14 may be integrated with the directional control 12 or may be a separate control such as a user depressible button.

The processor 8 controls the display driver 6 to create on the display an arrangement of icons as part of the graphical user interface. The processor 8 controls the display driver 6 to create on the display a highlight as part of the graphical user interface. One of the displayed icons is highlighted at any one time. The processor 8 receives signals from the directional control 12 and from the selection control 14. In response to a user actuation of the directional control 12, the processor controls the display driver 6 to move the highlight from the currently highlighted icon to an adjacent icon of the graphical user interface. Thus the user can move the highlight from one icon to a desired icon using the directional control 12. The user can enter a command or data corresponding to an icon by 'selecting' the icon. The user selects an icon either by highlighting the icon with selection occurring automatically or by highlighting the icon and then actuating the selection control 14. The position of an icon in the arrangement determines whether the icon is selected automatically when it is highlighted or whether an additional actuation of the selection control 14 is required.

Preferably, an icon which can be automatically selected will be a peripheral icon, that is it is in a peripheral portion such as the edge of the arrangement of icons. The non-peripheral icons can be used as "stepping stones" to move the highlight onto a different icon. This is possible because the highlighting of the non-peripheral icons does not cause its automatic selection. In contrast, the peripheral icons cannot be used as "stepping stones" to place the highlight on a different icon as placing the icon on a peripheral icon causes its automatic selection. After selection of an icon, the highlight preferably returns automatically, without user intervention, to a "home" icon within the non-peripheral icons. The "home" icon is positioned centrally within the arrangement of icons, thereby minimising the average travelling distance of the highlight for selecting the next icon. For example, if the arrangement of icons is a 4 row by 3 column array of icons the central "home" icon would be located in the central second column and in either one of the central rows i.e. in the second row or the third row.

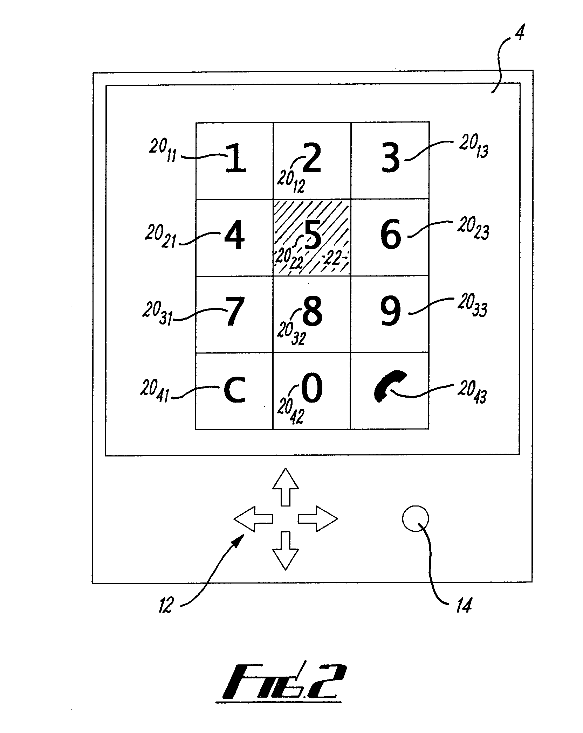

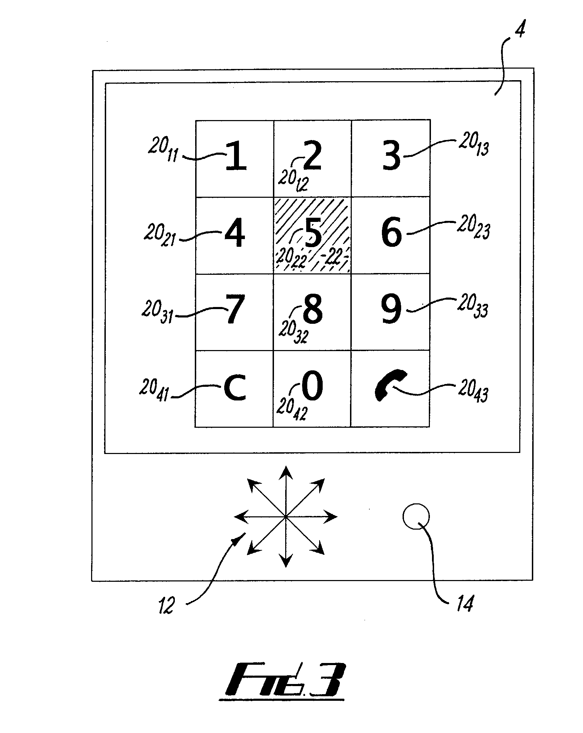

Figs. 2 and 3 illustrate a user input device 2 according to one embodiment. The user input device is preferably part of a hand-portable device, for example, a mobile phone or a personal digital assistant. The display 4, directional control 12 and selection control 14 are illustrated. In these examples, the selection control is not integrated with the directional control, but in other embodiments it may be. The display 4 displays a graphical user interface comprising an arrangement of icons representing a keyboard. Each icon comprises an indicia of the keyboard within a border and resembles the key of a keyboard. The arrangement of icons is in the form of an N row x M column array of icons. In this example, N = 4 and M = 3. An icon at row n and column m is referenced in the Figure by 20ₙₘ. The first, second, third and fourth rows of icons comprise respectively the indicia: 1, 2, 3; 4, 5, 6; 7, 8, 9; clear, o, dial. A telephone number is dialled by inputting the telephone number and then dialling it. The telephone number is input by sequentially selecting the icons which correspond to the sequence of digits of a telephone number to be dialled. The telephone number is then dialled by selecting the 'dial' icon 20₄₃. The graphical user interface has a highlight 22 (illustrated in the Figures by shading) positioned over icon 20₂₂. The highlight 22 can be moved from icon to icon by the directional control 12.

In the embodiment of Fig. 2, the directional control 12 is capable of four-way directional movement. The directional control 12 has four separate user depressible buttons for up, down, left and right. The highlight 22 is moved by a single actuation of the 4-way directional control 12 to an icon in the same column but an adjacent row ( actuation of the up or down button) or to an icon in the same row but an adjacent column (actuation of the left or right button). For example, when the highlight is positioned over the icon 20₂₂, it may be moved to highlight any one of the icons 20₁₂, 20₂₁, 20₂₃ and 20₃₂ only. According to a first implementation, the icons of the first column (20₁₁, 20₂₁, 20₃₁ and 20₄₁) and the icons of the third column (20₁₃, 20₂₃, 20₃₃ and 20₄₃) are peripheral icons of the arrangement. The icons of the second column 20₁₂, 20₂₂, 20₃₂ and 20₄₂ are non-peripheral icons of the arrangement. A non-peripheral icon is selected by moving the highlight 22 so that the desired icon is highlighted and then the selection control 14 is actuated. A peripheral icon is selected automatically when the highlight is moved to highlight the desired icon. After selection of an icon, the highlight 22 preferably returns to a "home" position within the non-peripheral icons which may be one of the icons 20₁₂, 20₂₂, 20₃₂ or 20₄₂ or the icon in the same row adjacent the automatically selected icon, but is preferably the icon 20₂₂. According to another implementation, the peripheral icons would include the icons in row n = 1 and n = 4 with the non-peripheral icons being those in rows n = 2 and 3.

Fig. 3 illustrates a user input device similar to that illustrated in Fig. 2. The difference in the two figures, is that the directional controller 12 in Fig. 3 is capable of multi-way directional input, in this example, eight-way input. That is, the highlight can be moved from one icon to any other icon touching that icon. Thus if the highlight 22 is on icon 20₂₂ it can be moved by a single actuation of the 8-way directional control 12 to any one of 20₁₁, 20₁₂, 20₁₃, 20₂₁, 20₂₃, 20₃₁, 20₃₂ and 20₃₃. As there is a greater degree of freedom of movement for the highlight 22 in this embodiment, it is possible to extend the peripheral portions of the arrangement. The peripheral icons are the icons on the perimeter of the array that is icons 20₁₁, 20₁₂, 20₁₃, 20₂₁, 20₂₃, 20₃₁, 20₃₃, 20₄₁, 20₄₂ and 20₄₃. The non-peripheral icons are 20₂₂ and 20₃₂. The non-peripheral icons 20₂₂ and 20₃₂ can, as described in relation to Fig. 2, be highlighted without selection whereas the highlighting of any of the peripheral icons automatically causes their selection. The selection of the non-peripheral icons 20₂₂ and 20₃₂ additionally requires the user actuation of the selection control 14. After selection of an icon, the highlight 22 preferably returns to a "home" position within the non-peripheral icons either icon 20₂₂ or 20₃₂ or the nearest one of icons 20₂₂ and 20₃₂ to the automatically selected icon and preferably the icon 20₂₂.

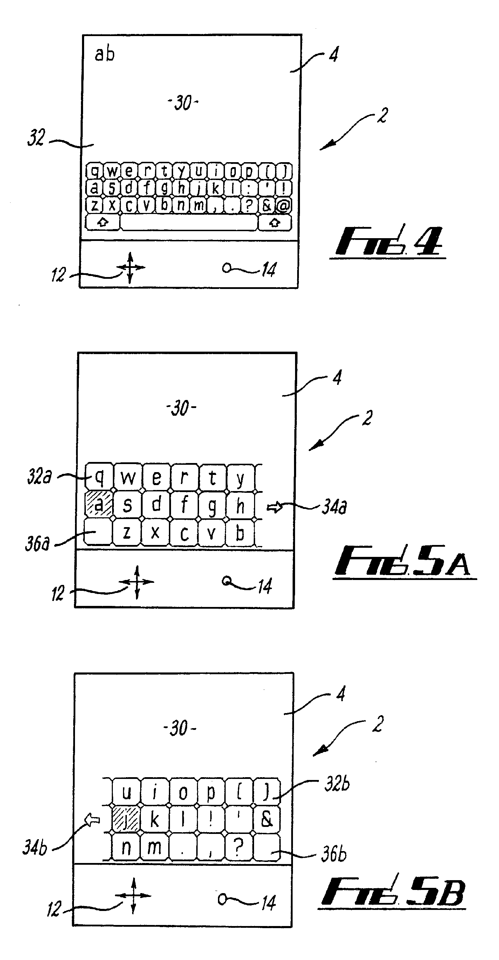

Figs. 4 illustrates a user input device 2. The user input device is preferably part of a hand-portable device, for example, a mobile phone or a personal digital assistant. The display 4, directional control 12 and selection control 14 are illustrated. In this example, the selection control is not integrated with the directional control, but in other embodiments it may be. The display 4 displays a graphical user interface comprising an arrangement 32 of icons representing an alphanumeric typist keyboard, in this example, a QWERTY keyboard and a text input portion 30 which displays text which has been input. Each icon comprises an indicia of the keyboard within a border and resembles the key of a keyboard. The arrangement of icons 32 is in the form of an N row x M column array of icons. In this example, if the directional controller 12 is a four-way directional controller then the first and last rows are the peripheral icons. If the directional controller is an eight-way directional controller the peripheral icons are the first and last rows and the first and last columns.

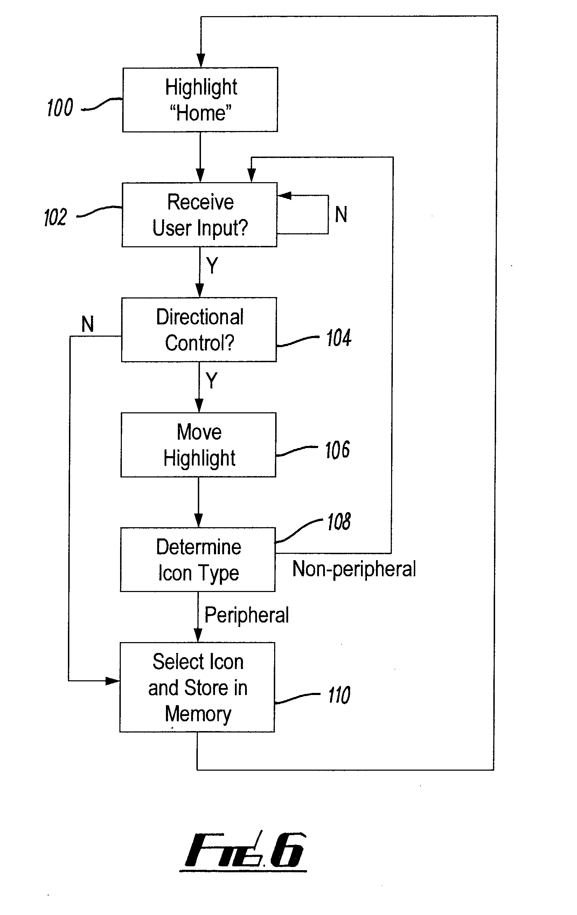

Figs. 5a and 5b illustrate a user input device 2. The user input device is preferably part of a hand-portable device, for example, a mobile phone or a personal digital assistant. The display 4, directional control 12 and selection control 14 are illustrated. In this example, the selection control is not integrated with the directional control, but in other embodiments it may be. The display 4 displays a graphical user interface comprising an arrangement of icons 32a, 32b representing part of an alphanumeric typist keyboard, in this example, a modified QWERTY keyboard and a text input portion 30 which displays text which has been input. The left-hand side of the keyboard is illustrated in Fig 5a as an arrangement 32a of icons and the right hand-side is illustrated in Figure 5b as an arrangement 32b of icons . Each icon comprises an indicia of the keyboard within a border and resembles the key of a keyboard. The QWERTY keyboard is "modified" as the spacebar key has been replaced by keys 36a, 36b at the bottom left and bottom right of the keyboard, and the punctuation keys have been introduced at the right hand columns of the keyboard.

In Fig 5a, the graphical user interface comprises an arrangement of icons representing the left hand side of the keyboard and additionally comprises an icon 34a which when selected, changes the arrangement 32a of icons of Fig 5a into the arrangement 32b of icons of Fig 5b. Selection of the icon 34a may alternately move the displayed portion of the keyboard one step to the left so that the "q, a ..." column is no longer displayed and the "u, j, n" column is displayed. This selection of the icon 34a scrolls the keyboard across the display, in this example, displaying six columns at a time. Of course more or less columns may be displayed at a time. The icon 34a is optional, as scrolling may be provided by drawing a cursor control device to the side of the display i.e. by trying to move the highlight outside the perimeter of the keyboard. The arrangement 32a of icons is in the form of an N row x M column array of icons. If the directional controller 12 is a four-way directional controller then the first and last rows are the peripheral icons. If the directional controller is an eight-way directional controller the peripheral icons are the first and last rows and the first and last columns.

In Fig 5b, the graphical user interface comprises an arrangement of icons representing the right hand side of the keyboard and additionally comprises an icon 34b which when selected, changes the arrangement 32b of icons of Fig 5b into the arrangement 32a of icons of Fig 5a. The arrangement 32b of icons is in the form of an N row x M2 column array of icons. If the directional controller 12 is a four-way directional controller then the first and last rows are the peripheral icons. If the directional controller is an eight-way directional controller the peripheral icons are the first and last rows and the first and last columns.

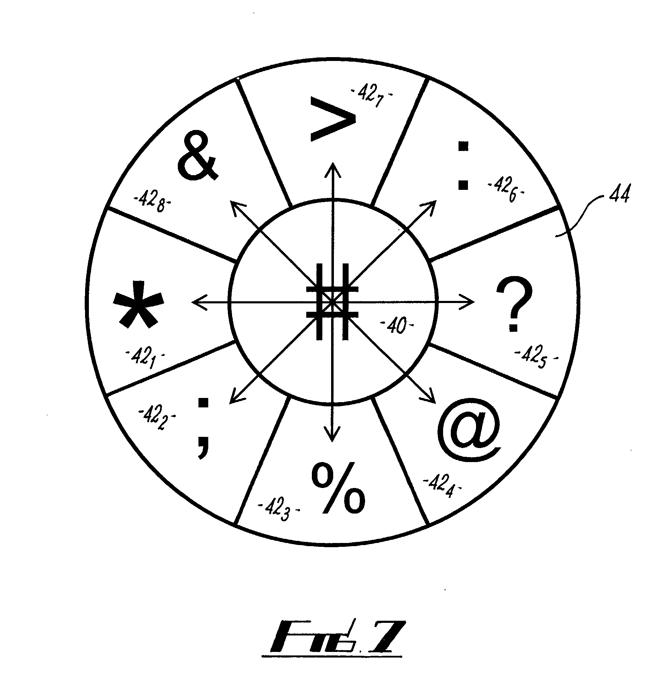

Fig. 6 illustrates the process steps of an embodiment of the invention. When a graphical user interface mode is entered, the processor 8 controls the display 4 to display a graphical user interface comprising an arrangement of icons comprising peripheral and non-peripheral icons. A highlight 22 is placed at a "home" non-peripheral icon of the arrangement. This is illustrated in step 100 in Fig. 6. The process then waits for user input from the user input interface 10 at step 102. If user input is received the process moves to step 104. At step 104, if the user input is from the selection control 14, then the process jumps to step 110 whereas if the input is from the directional control 12 the process moves to step 106. At step 106, in response to the directional input, the processor 8 controls the display driver 6 to move the highlight 22 in the display. The highlight 22 highlights one icon of the arrangement and a single actuation of the directional controller 12 moves the highlight to an adjacent icon. The process then moves to step 108. The processor 8 at step 108 determines whether or not the new icon to which the highlight has been moved is a peripheral icon or a non-peripheral icon. The processor will typically store in the memory 16 a database that records whether or not a particular icon is a peripheral icon and will access this database each time the highlight is moved. If the highlight 22 is moved to one of the peripheral icons, the process moves to step 110. If the highlight is moved to a non-peripheral icon, the process returns to step 102 and awaits the next user input. At step 110 'selection' of the icon occurs. If the icon represents a command the processor 8 will carry-out the command and the process will return to step 100 thereby moving the highlight to the 'home' icon. If the icon represents a data value, the processor will store the data value in memory 16 and perhaps display the value of the display 4 and the process will then return to step 100 thereby moving the highlight to the 'home' icon.

Embodiments of the invention encompass the use of a single icon for the input of multiple data values. For example, a single icon may represent the data values 'a', 'b' and 'c'. Selection of the icon once inputs 'a'. Selection of the icon twice in rapid succession inputs 'b'. Selection of the icon three times in rapid succession inputs the value 'c'.

Embodiments of the invention also provide for the dynamic adaptation of a graphical user interface for text input, in response to prior user input. In this embodiment, when the user is inputting a string of characters it is assumed that the characters input so far either represent a complete word or a first part of a word for which further input is required for its completion. The processor 8 determines after each character has been input which characters could possibly follow it as the next character in the string. The processor then controls the graphical user interface to display only the icons representing these possible characters. Referring to Fig 6, step 100 therefore additionally comprises the step of adapting the arrangement of icons to reduce the number of icons displayed.

Although in the preceding embodiments, the arrangement of icons has been illustrated as an array, it does not have to be an array. Fig. 7 illustrates an arrangement of icons in which the icons occupy an annulus 44 centred on a central icon 40. The icons of the arrangement therefore radiate outwardly in a radial direction from the central icon and the icons of an annulus are positioned at the same radius from the central icon. Although a singular annulus 44 is illustrated, in other embodiments there may be a plurality of annuli of successively greater radii centred on the central icon 40. A highlight is moveable radially from an icon in one annulus or from the central icon 40 to an icon in the adjacent annulus of greater radius. The highlight is also moveable from one icon to another within each of the annuli. The central icon is preferably the "home" position. The peripheral icons are preferably those icons in the last annulus of greatest radius.

Although in the preceding embodiments, four-way and eight-way directional movement have been described, the movement may be any type of multi-directional movement.

Although the present invention has been described in the preceding paragraphs with reference to various examples, it should be appreciated that modifications and variations to the examples given can be made without departing from the scope of the invention as claimed.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis is placed thereon.

## Claims

1. A user input device comprising:
means for producing a highlight for highlighting any one of the icons in an arrangement of icons, the arrangement having a first portion comprising a first plurality of icons and a second portion comprising at least one icon;
a user input comprising a directional control for user actuation and a selection control for user actuation; and
control means arranged to change the position of the highlight in response to user actuation of the directional control, to select an icon of the second portion of the arrangement in response to user actuation of the selection control when the icon is highlighted and to select automatically an icon of the first portion in response to the highlighting of the icon.

2. A user input device as claimed in claim 1, wherein the first portion is a peripheral portion of the arrangement and the second portion is a non-peripheral portion of the arrangement.

3. A user input device as claimed in claim 1 or 2, wherein the control means is arranged to change the position of the highlight from one icon to another in response to each user actuation of the directional control.

4. A user input device as claimed in any preceding claim, wherein the control means is arranged to move the highlight, after selection of an icon, to a "home" icon of the second portion of the arrangement of icons.

5. A user input device as claimed in any preceding claim, wherein the arrangement of icons comprises an N row by M column array of icons and the "home" icon is located in the central row(s) of the array and/or the central column(s) of the array.

6. A user input device as claimed in any preceding claim, wherein the arrangement comprises an N row by M column array of icons, the directional control allows 4-way movement of the highlight, in response to a user actuation, to an icon in an adjacent row but the same column or in an adjacent column but the same row, and the first plurality of icons are either in the first row and last row of the array or are in the first column and last column of the array.

7. A user input device as claimed in any one of claims 1 to 5, wherein the arrangement comprises an N row by M column array of icons, the directional control allows multi-way movement of the highlight, in response to a user actuation, to an adjacent icon, and the first plurality of icons are those in the first and last rows of the array and those in the first and last columns of the array.

8. A user input device as claimed in any preceding claim further comprising a display for displaying the arrangement of icons and the highlight.

9. A user input device as claimed in claim 8 further comprising means for determining from the identity of the preceding selected icon(s) of an input sequence those icons which will not be selected for the remainder of the input sequence and removing them from the display.

10. A user input device as claimed in any preceding claim further comprising means for selecting different alphanumeric characters in response to the repetitive selection of an icon a different number of times.

11. A user input device as claimed in any preceding claim wherein the arrangement of icons represents a 3 column keyboard or keyboard portion or a 3 row keyboard or keyboard portion with each icon representing a key of the keyboard or keyboard portion.

12. A method of user input by selecting an icon from an arrangement of icons, the arrangement having a first portion comprising a first plurality of icons and a second portion comprising at least one icon, comprising the steps of:
highlighting one icon at a time;
selecting an icon of the first portion by highlighting it; and
selecting an icon of the second portion by highlighting it and then actuating an input device.

13. A method of user input as claimed in claim 12, wherein the first portion is a peripheral portion of the arrangement and the second portion is a non-peripheral portion of the arrangement.

14. A method of user input as claimed in claim 12 or 13 further comprising the step of moving the highlight to a centrally located "home" icon after selecting an icon.

15. A method of user input as claimed in claim 14, wherein the arrangement of icons comprises an N row by M column array of icons and the "home" icon is located in the central row(s) of the array and/or the central column(s) of the array.

16. A method as claimed in any one of claims 12 to 15, wherein the arrangement comprises an N row by M column array of icons and the first plurality of icons are either in the first row and last row of the array or are in the first column and last column of the array.

17. A method as claimed in any one of claims 12 to 15, wherein the arrangement comprises an N row by M column array of icons and the first plurality of icons are those in the first and last rows of the array and those in the first and last columns of the array.

18. A method as claimed in any one of claims 12 to 17 further comprising the steps of:
displaying the arrangement of icons on a display and
displaying a highlight on the display to highlight an icon.

19. A method as claim in 18 further comprising the step of altering the icons displayed in dependence on the icons previously selected.

20. A method as claimed in any one of claims 12 to 19 further comprising the step of:
repeatedly selecting an icon a different number of times to input a different alphanumeric character.

21. A mobile communications device comprising an input device as claimed in any one of claims 1 to 11.

22. A user input device comprising:
a user input comprising a directional control for user actuation and a selection control for user actuation; and
means arranged to produce a highlight for highlighting any one of the icons of an arrangement of icons, the arrangement having a first portion comprising a first plurality of icons and a second portion comprising at least one icon and arranged to change the position of the highlight in response to user actuation of the directional control, wherein a highlighted icon is selected without user actuation of the selection control if the highlighted icon is an icon of the first portion and is selected in response to user actuation of the selection control if the highlighted icon is an icon of the second portion.

23. A user input device comprising:
means for producing a highlight for highlighting any one of the icons of an arrangement of icons;
a user input; and
control means arranged to select a highlighted icon and to move the highlight from one icon to another in response to actuation of the user input and arranged to automatically move the highlight, after selection of an icon, to a "home" icon centrally located in the arrangement of icons.

24. A user input device as claimed in claim 23, wherein the "home" icon is positioned within the arrangement of icons such that the average travelling distance of the highlight for selecting the next icon is minimised.

25. A user input device as claimed in claim 23 or 24, wherein the arrangement of icons comprises an N row by M column array of icons and the "home" icon is located in the central row(s) of the array and/or the central column(s) of the array.

26. A user input device as claimed in claim 23 or 24 or 25 wherein the control means is arranged to select first ones of the arrangement of icons automatically when they are highlighted.

27. A user input device as claimed in claim 23 or 24 or 25 wherein the control means is arranged to select highlighted icons in response to user actuation of the user input.

28. A method of user input by selecting an icon from an arrangement of icons, comprising the steps of:
highlighting one icon at a time; and
selecting a highlighted icon and then moving the highlight to a centrally located "home" icon.

29. A user input device comprising:
a display;
means for producing an arrangement of icons on the display;
a user input; and
control means arranged to select an icon in response to the user input and arranged to change the arrangement of icons in response to the user input.

30. A user input device as claimed in claim 29, wherein the control means is arranged to scroll an arrangement of icons across the display in response to the user input.

31. A user input device as claimed in claim 29 or 30 wherein the arrangement of icons is a typist keyboard or a portion of a typist keyboard.

32. A user input device as claimed in any one of claims 29 to 31 further comprising means for producing a highlight for highlighting any one of the icons in the displayed arrangement of icons wherein the control means is arranged to change the position of the highlight in response to the user input and wherein changing the displayed arrangement of icons is achieved by moving the highlight to a predetermined position.
